# EUROPÄISCHE PATENTSCHRIFT

(11) **EP 0 360 917 B1**
(45) Veröffentlichungstag und Bekanntmachung des Hinweises auf die Patenterteilung: **22.12.1993**
(21) Anmeldenummer: 88116233.3
(22) Anmeldetag: 30.09.1988
(51) Int. Cl.: H04L 29/10

(54) **Verfahren und Schaltungsanordnung zur Steuerung einer seriellen Schnittstellenschaltung**
Method and circuit arrangement for controlling a serial interface circuit
Méthode et circuit pour la commande d'un circuit d'interface série

(43) Veröffentlichungstag der Anmeldung: 04.04.1990
(73) Patentinhaber: Siemens Nixdorf Informationssysteme Aktiengesellschaft, 33102 Paderborn (DE)
(72) Erfinder: Fenzl, Josef, D-8000 München 90 (DE); Lajtai, Karoly, D-8000 München 83 (DE)
(74) Vertreter: Fuchs, Franz-Josef, Dr.-Ing.

(56) Entgegenhaltungen:
- EP-A- 0 164 105
- IBM TECHNICAL DISCLOSURE BULLETIN, Band 28, Nr. 6, November 1985, Seiten 2574-2575, New York, US; "SDLC interface adapter in microprocessor-based modems"
- IBM TECHNICAL DISCLOSURE BULLETIN, Band 30, Nr. 6, November 1987, Seiten 54-56, New York, US; "Modem line change detection reporting technique"
- IEEE INTERNATIONAL CONFERENCE ON CIRCUITS AND COMPUTERS ICCC 82, 28. September - 1. Oktober 1982, New York, Seiten 98-100, IEEE, New York, US; A.B. GLASER et al.: "The XPC - a VLSI link-level controller for X.25 LAPB"
- ELEKTRONIK, Band 36, Nr. 4, 20. Februar 1987, Seiten 77-80, München, DE; S. GANDHI: "UART-Baustein der neuen Generation"

## Beschreibung

Die Erfindung betrifft ein Verfahren und eine Schaltungsanordnung zur Steuerung der Schnittstellenbitströme durch eine mikroprozessorgesteuerte serielle Schnittstellenschaltungsanordnung mit den im Oberbegriff der Ansprüche 1 und 4 angegebenen Merkmalen.

Die in einer mikroprozessorgesteuerten seriellen Schnittstellenschaltungsanordnung enthaltene Mikroprozessoreinheit ist durch vielfältige Steuerungsaufgaben in ihrer Leistungsfähigkeit mehr oder weniger stark eingeschränkt. Zum Beispiel muß für eine Datenübertragung ein Empfänger einsynchronisiert werden, indem diesem fortwährend ein festgelegtes Bitmuster zugesendet wird. Allein hierfür ist ein großer Steuerungsaufwand notwendig. Ein anderes Beispiel ist die Überwachung der Meldungen, die bei der Schnittstellenschaltungsanordnung eingehen. Die Meldungen müssen immer wieder daraufhin abgefragt werden, ob sie sich geändert haben und ob eine neue Reaktion durch die Mikroprozessoreinheit notwendig geworden ist. Während solcher Überwachungsaufgaben steht die Mikroprozessoreinheit für übergeordnete Aufgaben, wie z.B. die Behandlung von Protokollen höherer ISO-Schichten, nicht zur Verfügung. Es kann sogar allein durch die genannten Steuerungs- und Überwachungsaufgaben bei hohen Leitungsgeschwindigkeiten zur Überlastung der Mikroprozessoreinheit und damit zu Zeitverlusten kommen. Zu Zeitverlusten kommt es auch dadurch, daß unterschiedliche Zeitverhältnisse in Folge unterschiedlicher Datenübertragungsgeschwindigkeiten nur bedingt von der Mikroprozessoreinheit berücksichtigt werden können, da die Mikroprozessoreinheit keine Zeitinformation darüber hat, wann die Aussendung eines seriellen Bitstroms tatsächlich zu Ende ist. Ein Bitstrom kann mit den unterschiedlichsten Baudraten ausgesendet werden. Erst wenn der vorgenannte Bitstrom ausgesendet ist, kann ein weiterer Bitstrom ausgesendet werden. Damit keine Zeitprobleme entstehen, nimmt in der Regel die Mikroprozessoreinheit an, daß der jeweils ausgesendete Bitstrom mit der langsamsten Baudrate ausgesendet wurde.

Aus IBM Technical Disclosure Bulletin, Band 28, Nr. 6, Nov. 1985, Seiten 2574 und 2575 ist beispielsweise eine Schaltungsanordnung zur Datenfernübertragung bekannt, die mit einem Mikroprozessor arbeitet. Damit der Mikroprozessor bei einer Blockübertragung von Arbeiten wie Erkennen von Blockbegrenzungszeichen, Einfügen und Löschen von Nullbits und Erzeugen und Prüfen von Blockprüfzeichen entlastet wird, sind zwischen einer Datenendeinrichtung und einem Sende- und Empfangsteil für die Datenfernübertragung dieser Schaltungsanordnung an seriellen digitalen Übertragungsstrecken für zu sendende und zu empfangende Daten je ein zusätzliches Schaltungsteil angeordnet, die entsprechende Funktionen hierfür übernehmen. Die zusätzlichen Schaltungsteile führen zwar Arbeiten für den Mikroprozessor aus, unterbrechen diesen aber innerhalb eines gleichen Arbeitsganges häufig. Nach dem Senden eines Datenbytes beispielsweise unterbricht das zuständige zusätzliche Schaltungsteil den Mikroprozessor, um ein nächstes Datenbyte anzufordern. Der Mikroprozessor wird dadurch auch viel mit Steuerungsaufgaben belastet, was seine Leistungsfähigkeit herabsetzt. Nach dem Aussenden eines letzten Bytes innerhalb der Übertragung eines Informationsfeldes bei der Blockübertragung veranlaßt der Mikroprozessor das zuständige zusätzliche Schaltungsteil jeweils einzeln nacheinander eines von mehreren benötigten Blocksicherungszeichen zu erzeugen. Der Mikroprozessor ist auch dadurch viel mit Steuerungsaufgaben belastet. Da der Informationsaustausch zwischen dem Mikroprozessor und dem betreffenden zusätzlichen Schaltungsteil auf der seriellen Verbindungsstrecke zwischen der Datenendeinrichtung und dem Sende- und Empfangsteil für die Datenfernübertragung dieser Schaltungsanordnung passiert, steht während dieser Zeit diese Verbindungsstrecke nicht für eine reguläre Datenübertragung zur Verfügung. Als weiteres ist beispielsweise die Überwachung von eingehenden Meldungen, die angeben, was mit eingehenden Daten geschehen soll, Aufgabe des Mikroprozessors, was ihn ebenfalls stark belastet.

Aus Elektronik, Band 36, Nr. 4, 1987, Seiten 77 bis 80 ist ein asynchron arbeitender Empfänger/Sender-Baustein für seriell zu sendende und zu empfangende Daten bekannt, die von und zu einem Mikroprozessor parallel übertragen werden. Zu diesem Zweck weist der Baustein einen Sendeteil, einen Empfangsteil und eine Taktzählerstufe auf. Der Sendeteil führt eine Parallel-Seriell-Umwandlung der Daten durch, bevor sie gesendet werden. Der Empfangsteil führt eine Seriell-Parallel-Umwandlung der Daten durch, bevor sie an den Mikroprozessor weitergeleitet werden. Zur Entlastung des Mikroprozessors weist der Baustein jeweils einen Zwischenpuffer vor dem Sende- und dem Empfangsteil auf, in dem die zu sendenden bzw. zu empfangenden Daten in einer größeren Anzahl zwischengespeichert werden können. Damit ergeben sich für den Mikroprozessor beispielsweise beim Empfangen von Daten längere Antwortzeiten, weil nicht für jedes eingegangene Zeichen eine Unterbrechung erfolgen muß. Ähnliches gilt auch beim Senden von Daten. Die Überwachung des Eintreffens von Meldungsänderungen am Baustein beispielsweise aber, was wichtig ist, damit die eintreffenden Daten weiter in der richtigen Weise behandelt werden, wird vom Mikroprozessor durchgeführt. Dies setzt seine Leistungsfähigkeit herab.

Aufgabe der Erfindung ist es, ein Verfahren und eine Schaltungsanordnung der eingangs genannten Art so auszubilden, daß die sich durch vielfältige Steuerungsaufgaben ergebende Belastung der Mikroprozessoreinheit einer mikroprozessorgesteuerten seriellen Schnittstellenschaltungsanordnung verringert werden kann.

Für das Verfahren wird diese Aufgabe durch die im Anspruch 1 angegebenen Merkmale gelöst. Danach wird der entlastende Effekt für die Mikroprozessoreinheit dadurch erzielt, daß ein Teil der durch die Mikroprozessoreinheit bisher bewerkstelligten Aufgaben durch spezialisierte Zusatzeinheiten ausgeführt wird, die von der Mikroprozessoreinheit nur initialisiert werden. Die Mikroprozessoreinheit gewinnt damit Zeit zur Abarbeitung ihrer wesentlichen Aufgaben. Da die Zusatzeinheiten abhängig von den tatsächlichen Sendegeschwindigkeiten arbeiten, werden Zeitverluste durch Einräumen von Sicherheitszeiträumen bei der Datenübertragung vermieden.

Die Schaltungsanordnung zur Durchführung des Verfahrens weist die im Anspruch 4 angegebenen Merkmale auf. Die Sende- bzw. Empfangstaktzählerstufen der Zusatzeinheiten nützen die auf den Schnittstellenleitungen mit übertragenen Sende- und Empfangstakte aus, um eine echte Zeitinformation darüber zu erhalten, wann ein Bitstrom tatsächlich ausgesendet wurde.

Vorteilhafte Ausgestaltungen der Erfindung sind Gegenstand von Unteransprüchen. Dabei sind die Zählerstufen der Zusatzeinheiten aus programmierbaren Zählern gebildet, um die Schaltungsanordnung unterschiedlichen Arbeitsbedingungen anpassen zu können.

Nachfolgend wird ein Ausführungsbeispiel der Erfindung anhand der Zeichnung näher erläutert.
Es zeigen:
- FIG 1: eine allgemeine Schaltungsanordnung einer seriellen Schnittstellenschaltungsanordnung gemäß der Erfindung in Blockdarstellung,
- FIG 2: eine beispielhafte Teilschaltung der Empfangslogik der Schaltungsanordnung nach FIG 1 und
- FIG 3: eine weitere beispielhafte Teilschaltung der Empfangslogik der Schaltungsanordnung nach FIG 1.

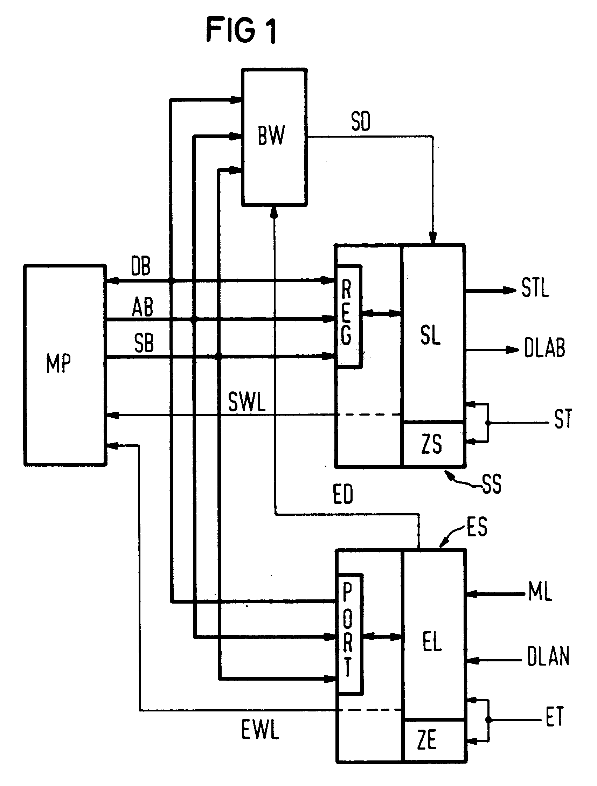

Die in Figur 1 gezeigte Schaltungsanordnung weist eine Mikroprozessoreinheit MP, eine Bitstromwandlereinrichtung BW, sowie eine Sendeschaltung SS und eine Empfangsschaltung ES auf. Die erwähnten Komponenten sind über einen Daten-, Adress- und Steuerbus DB, AB und SB miteinander verbunden. Eine weitere Verbindung besteht zwischen der Bitstromwandlereinrichtung BW und der Sendeschaltung SS über den Leitungsweg SD, und der Empfangsschaltung ES über den Leitungsweg ED. Über den Leitungsweg SD werden die auszusendenden seriellen Datenbitströme der Sendeschaltung SS übergeben. Über den Leitungsweg ED werden die von der Empfangsschaltung ES empfangenen seriellen Datenbitströme der Bitstromwandlereinrichtung BW übergeben. Neben diesen Verbindungen besteht eine Verbindung zwischen der Sendeschaltung SS und der Mikroprozessoreinheit MP über eine Senderweckleitung SWL, sowie eine Verbindung zwischen der Empfangsschaltung ES und der Mikroprozessoreinheit MP über eine Empfängerweckleitung EWL. Über die Senderweckleitung SWL und die Empfängerweckleitung EWL können der Mikroprozessoreinheit MP einerseits von der Sendeschaltung SS und von der Empfangsschaltung ES Informationen übergeben werden, die z.B. das tatsächliche Ende eines ausgegebenen Bitstroms oder das gültige Vorliegen einer neuen Meldung anzeigen.

Die Sendeschaltung SS weist einen speichernden Informationsaufnahmeschaltungsteil REG, eine Sendelogik SL und eine Sendetaktzählerstufe ZS auf. Der speichernde Informationsaufnahmeschaltungsteil REG ist mit den genannten Bussen verbunden und nimmt die darauf übertragenen und für die Sendeschaltung bestimmten Signale auf. Über den speichernden Informationsaufnahmeschaltungsteil REG kann die Sendeschaltung SS von der Mikroprozessoreinheit MP eingestellt und dann sich selbst überlassen werden. Die Sendelogik SL gibt entsprechend ihrer Einstellung entweder den von der Bitstromwandlereinrichtung BW seriell gewandelten Bitstrom oder aber selbst erzeugte Bitströme aus. Die selbst erzeugten Bitströme können je nach Sendeschaltungseinstellung verschieden aussehen. Beispielsweise kann ein fortlaufender 1er-Bitstrom, ein fortlaufender 0er-Bitstrom oder ein alternierender 01-Bitstrom ausgegeben werden. Die Mikroprozessoreinheit ist damit entlastet, die Ausgabe solcher Bitströme zu steuern.

Beim Senden von Datenströmen werden der Mikroprozessoreinheit MP über die Senderweckleitung SWL Zeitsignale übermittelt, anhand dieser die Mikroprozessoreinheit MP weiß, wann z.B. ein Datenbitstrom ausgegeben ist. Die Zeitsignale werden in Abhängigkeit von der tatsächlichen Sendegeschwindigkeit erzeugt, die durch die Sendetakte bestimmt wird. Die Mikroprozessoreinheit MP muß dadurch keine Sicherheitszeitspanne berücksichtigen, wenn sie die Ausgabe eines weiteren Bitstroms veranlaßt.

Der Zeitpunkt der Ausgabe eines Senderwecksignals über die Senderweckleitung SWL wird durch eine Sendetaktzählerstufe ZS gesteuert, der die Sendetakte über die Sendetaktleitung ST zugeführt werden. Die Sendetaktzählerstufe ZS ist beispielsweise durch einen voreinstellbarern Zähler gebildet, der bei Erreichen des voreingestellten Zählerhöchststandes ein Überlaufsignal erzeugt. Die Voreinstellung des Zählerhöchststandes kann durch die Mikroprozessoreinheit MP erfolgen.

Die Sendelogik SL weist zwei Ausgänge für einen auszusendenden Steuerbitstrom und einen Datenbitstrom auf. Der erste Bitstrom wird über den Leitungsweg STL und der zweite Bitstrom über den Leitungsweg DLAB ausgesendet.

Die Empfangsschaltung ES bildet das Gegenstück zur Sendeschaltung SS. Die Empfangsschaltung ES überwacht Änderungen bei den eintreffenden Meldungen und sendet bei Vorliegen einer Änderung über die Empfängerweckleitung EWL ein Signal an die Mikroprozessoreinheit MP. Nur bei einer Änderung des Meldungsgehalts muß die Mikroprozessoreinheit MP aktiv werden. Nach Mitteilung der Änderung der Meldung holt sich die Mikroprozessoreinheit MP die neue Meldeinformation bei der Empfangsschaltung ES ab. Die Mikroprozessoreinheit MP ist damit frei, die Meldeleitungen selbst auf Zustandsänderungen hin zu prüfen.

Die Empfangsschaltung ES weist demgemäß einen Meldeinformationsausgabeschaltungsteil PORT, eine Empfangslogik EL und eine Empfangstaktzählerstufe ZE auf. An dem Meldeinformationsausgabeschaltungsteil PORT sind die eingangs genannten Busse angeschlossen, über die die Mikroprozessoreinheit MP und Empfangsschaltung ES spezifischen Signale weitergegeben werden. In Richtung Mikroprozessoreinheit MP sind das im wesentlichen die jeweils neuen Meldungen, während es in Richtung Empfangsschaltung Steuersignale sind. Die Adressen dienen zum Auswählen der Empfangsschaltung ES. Die seriell empfangenen Daten werden vor der Übergabe an die Mikroprozessoreinheit MP über den Leitungsweg ED der Bitstromwandlereinrichtung BW zugeführt, die den seriellen Datenstrom in einen parallelen Datenstrom zurück umwandelt.

Die Empfangslogik EL weist Eingänge für die Meldeleitungen ML und die Empfangsdatenleitung DLAN auf. Über die Meldeleitungen ML wird ein Meldebitstrom und über die Empfangsdatenleitung DLAN ein serieller Datenbitstrom gesendet. Der Empfangslogik EL ist eine Empfangstaktzählerstufe ZE beigeordnet, die über die Empfangstaktleitung ET mit dem Empfangstakt versorgt wird. Anhand des Empfangstaktes ermittelt die Empfangstaktzählerstufe ZE, wielange eine Änderung einer Meldung schon vorliegt. Erst wenn die neue Meldung eine vorgegebene Zeitspannne angedauert hat, erfolgt eine Mitteilung in Form eines Wecksignals an die Mikroprozessoreinheit MP. Die Länge der Zeitspanne kann durch eine feste oder wahlfreie Vorgabe eines Wertes an einen in der Zählerstufe enthaltenen programmierbaren Zähler eingestellt werden, der ab dem Zeitpunkt der Änderung der Meldung die Empfangstakte zählt, bis in Abhängigkeit des Voreinstellungswertes ein Überlaufsignal entsteht.

Die Schaltungsanordnung nach Figur 1 ist eine Prinzipdarstellung einer seriellen Schnittstellenschaltungsanordnung gemäß der Erfindung und kann als Schaltungsanordnung für verschiedene serielle Schnittstellen realisiert werden. Näher betrachtet werden sollen nachfolgend die Realisierung der Schaltungsanordnung als V24- bzw. X21-Schnittstellenschaltungsanordnung. Bei der Realisierung als V24-Schnittstellenschaltungsanordnung können mit den Steuerleitungen STL beispielsweise die nach deutscher Norm mit S1 (108), S2 (105), PS2 (140) und PS3 (141) bezeichneten Steuerleitungen, sowie mit der Sendedatenleitung DLAB die nach deutscher Norm mit D1 (103) bezeichnete Datenleitung (allesamt nicht dargestellt) gemeint sein. Demgegenüber können mit den bei der Empfangslogik ankommenden Meldeleitungen ML die nach deutscher Norm mit M1 (107), M2 (106), M3 (125) und M5 (109) bezeichneten Meldeleitungen, sowie mit der Empfangsdatenleitung DLAN die nach deutscher Norm mit D2 (104) bezeichnete Datenleitung (ebenfalls allesamt nicht dargestellt) gemeint sein. Die in Klammern stehenden Zahlen stellen die entsprechenden Nummern der Leitungen nach der CCITT-Norm dar. Bei der Realisierung der Schaltungsanordnung als X21-Schnittstellenschaltungsanordnung können mit den Steuerleitungen STL die nach deutscher und CCITT-Norm mit C bezeichnete Steuerleitung, sowie mit der Sendedatenleitung DLAB die nach deutscher- und CCITT Norm mit T bezeichnete Datenleitung (allesamt nicht dargestellt) gemeint sein. Mit den Meldeleitungen ML kann die nach deutscher- und CCITT-Norm mit I bezeichnete Meldeleitung und mit der Empfangsdatenleitung DLAN die mit R bezeichnete Datenleitung (alle nicht dargestellt) gemeint sein.

Bei der Realisierung als V24-Schnittstellenschaltungsanordnung erfolgt, da die Meldungen über einen Zeitbereich parallel, also quasi stationär, angeliefert werden,eine Überwachung auf Änderung der Meldung in der Weise, daß ein Empfängerwecksignal an die Mikroprozessoreinheit MP dann abgegeben wird, wenn sich der Signalzustand auf wenigstens einer der Meldeleitungen ML eine gewisse Zeitspanne geändert hat. Im Gegensatz dazu werden bei der Realisierung als X21-Schnittstellenschaltungsanordnung Meldungen über die hier nur einfach vorhandene Meldeleitung I (in FIG 1 nicht dargestellt) und gegebenenfalls zusätzlich über die Empfangsdatenleitung R (ebenfalls in FIG 1 nicht dargestellt) seriell übergeben. Hier müssen also über einen Zeitbereich hinweg Folgezustände überwacht werden.

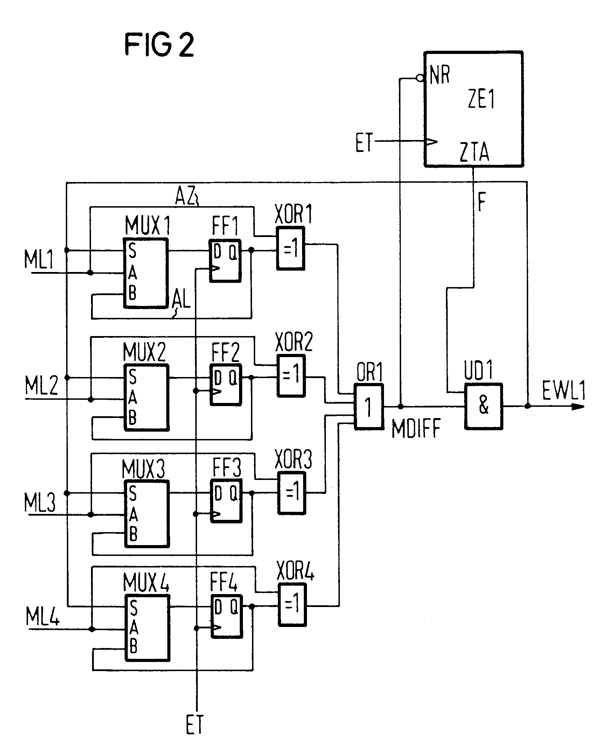

FIG 2 zeigt ein Ausführungsbeispiel einer Überwachungsschaltung für die Meldeleitungen ML1 bis ML4 einer V24-Schnittstellenschaltungsanordnung. Jede der Meldeleitungen ML1 bis ML4 ist dabei an einen Eingang einer der Mehrtaktspeicherstufen angeschlossen, die jeweils aus einem der Auswahlschalter MUX1 bis MUX4, denen jeweils eines der Speicherglieder FF1 bis FF4 nachgeschaltet sind, denen wiederum jeweils eines der Exklusiv-ODER-Glieder XOR1 bis XOR4 nachgeschaltet sind, gebildet sind. Die Mehrtaktspeicherstufen sind über ein ODER-Glied OR1 verknüpft, um ein Gesamtsignal zu erhalten. Das über die Gesamtsignalleitung MDIFF geführte Gesamtsignal schaltet über den zugehörigen ersten Eingang das Ausgangs-UND-Glied UD1 frei, das das am zugehörigen zweiten Eingang anliegende, über die Freigabesignalleitung F geführte Freigabesignal durchschaltet und als Empfangswecksignal EWL1 ausgibt. Das über die Freigabeleitung F geführte Freigabesignal wird von der Empfangstaktzählerstufe ZE1 erzeugt und über dessen Zeittaktausgang ZTA ausgegeben. Die Empfangstaktzählerstufe ZE1 ist ein Zähler, der nach seiner Freigabe mit den auf der Empfangstaktleitung ET übertragenen Empfangstakten mitzählt und jeweils beim Überschreiten seines Zählerhöchststandes ein Überlaufsignal erzeugt.

Die Funktionsweise der Überwachungsschaltung wird anhand der Meldeleitung ML1 und der einen, der Meldeleitung ML1 zugeordneten Mehrtaktspeicherstufe näher erläutert: Der Auswahlschalter MUX1 erhält hier über die Meldeleitung ML1 jeweils den aktuellen und über die Rückkopplungsleitung AZ jeweils den gespeicherten gültigen Signalzustand mitgeteilt. Solange keine Zustandsänderung auf der Meldeleitung ML1 erfolgt, wird auf der Auswahlschalterleitung AL jeweils der gespeicherte gültige Signalzustand dem D-Flip-Flop FF1 übergeben, das mit jedem Empfangstakt der Empfangstaktleitung ET den gespeicherten gültigen Signalzustand zunächst immer wieder übernimmt. Die Eingänge des Exklusiv-ODER-Gliedes XOR1 weisen damit zu diesem Zeitpunkt den gleichen Signalpegel auf. Das Ausgangssignal des Exklusiv-ODER-Gliedes XOR1, das den logischen Wert 0 aufweist, steuert über das ODER-Glied OR1 und über die Gesamtsignalausgangsleitung MDIFF den negierenden Reseteingang der Empfangstaktzählerstufe ZE1 und den ersten Eingang des Ausgangs-UND-Gliedes UD1 an, an dessen zweiten Eingang das von der Empfangstaktzählerstufe ZE1 erzeugte und über die Freigabesignalleitung F geführte Freigabesignal anliegt. Da der logische Signalpegel auf der Gesamtsignalausgangsleitung MDIFF den Wert 0 aufweist, wird einerseits das Loslaufen der Empfangstaktzählerstufe ZE1 verhindert und andererseits das Ausgangs-UND-Glied UD1 gesperrt. Über die an dessen Ausgang angeschlossene Empfängerweckleitung EWL1 wird kein Signal ausgegeben.

Ändert sich der Signalzustand auf der Meldeleitung ML1, weisen die Signalpegel des Exklusiv-ODER-Gliedes XOR1 zunächst einmal unterschiedliche Werte auf, so daß das Signal auf der Gesamtsignalausgangsleitung MDIFF den logischen Wert 1 annimmt. Die Empfangstaktzählerstufe ZE1 und das Ausgangs-UND-Glied UD1 werden freigeschaltet. Beim Überschreiten des Zählerhöchststandes der Empfangstaktzählerstufe ZE1 wird das Freigabesignal F erzeugt, das über die Empfängerweckleitung EWL1 ausgegeben wird. Der Auswahlschalter MUX1 wird durch dieses Signal umgesteuert, so daß über die Meldeleitung ML1 der neue Signalpegel an das D-Flip-Flop FF1 gelangt. Der neue Signalpegel wird von dem D-Flip-Flop FF1 mit dem nächsten Empfangstakt übernommen. Die Eingänge des Exklusiv-ODER-Gliedes XOR1 weisen damit den gleichen Signalpegel auf, weshalb die Empfangstaktzählerstufe ZE1 wieder zurückgesetzt wird. Das Signal auf der Ausgangsleitung EWL1 wird über das Ausgangs-UND-Glied UD1 wieder abgeschaltet. Parallel dazu wird der Auswahlschalter MUX1 wieder umgesteuert, so daß er jetzt den neu gespeicherten Signalzustand durchschaltet, der mit dem aktuell über die Meldeleitung ML1 angelieferten Signalzustand bis zu dessen nächsten Signalzustandsänderung übereinstimmt.

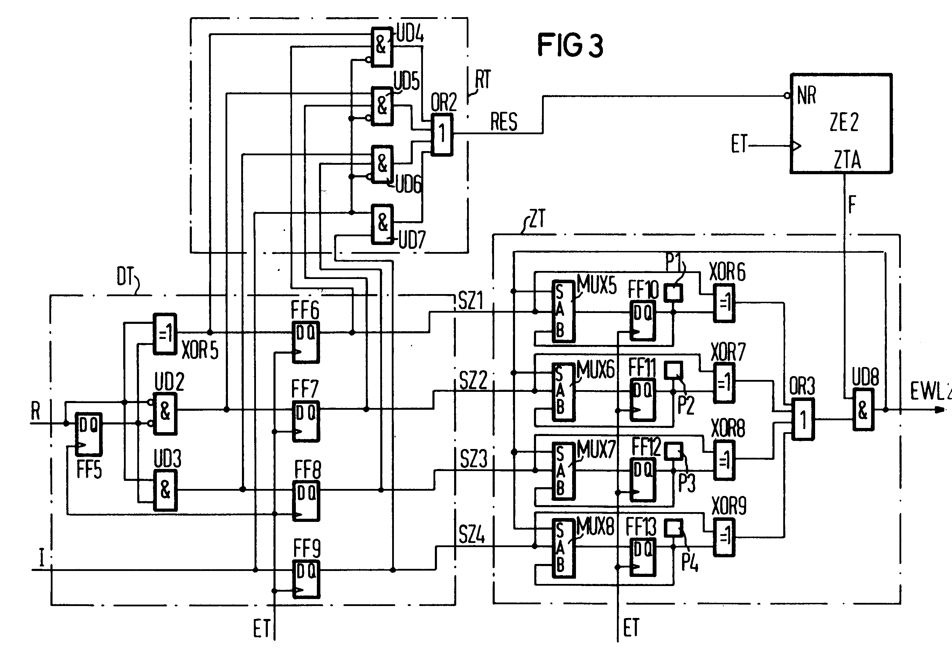

FIG 3 zeigt den für die Erzeugung eines Empfängerwecksignals EWL nach Änderung der bei der Empfangslogik EL eintreffenden Meldung zuständigen Schaltungskomplex der Empfängerschaltung ES für den Fall, daß die eingangs beschriebene Schaltungsanordnung als X21-Schnittstellenschaltung realisiert ist. Die Schaltung überwacht die Signale auf den X21-Schnittstellenleitungen I und R, die nachfolgend kurz auch mit I- und R-Signal bezeichnet werden. In ähnlicher Weise wird das über den Leitungsweg EWL2 übertragene Empfängerwecksignal nachfolgend kurz mit Empfängerwecksignal EWL2 bezeichnet. Desgleichen werden schaltungsinterne Signale kurz mit dem Namen der Leitungswege bezeichnet, auf denen sie übertragen werden.

Überwacht werden vier Signalzustände SZ1 bis SZ4 der I- und R-Signale, wobei ein Wechsel von einem Signalzustand zu einem anderen zum Empfängerwecksignal EWL2 führt, wenn die Änderung eine vorgegebene Anzahl von auf der gleichnamigen Signalleitung übertragenen Empfangstakten ET andauert. Die vier Signalzustände entsprechen jeweils verschiedenen Meldungen und unterscheiden sich wie folgt:
- SZ1:: I = 0
R = 0101 alternierend
- SZ2:: I = 0
R = 0000...
- SZ3:: I = 0
R = 1111...
- SZ4:: I = 1
R = X; X = beliebig
Die gezeigte Schaltung kann in mehrere Schaltungsteile zerlegt aufgefaßt werden, die nachfolgend mit Decodierteilschaltung DT, Resetteilschaltung RT, Zeitteilschaltung ZT und Empfangstaktzählerstufe ZE2 bezeichnet sind. Die Decodier- und die Zeitteilschaltung DT und ZT, sowie die Empfangstaktzählerstufe ZE2 werden mit dem Empfangstakt ET gesteuert.

Die Empfangstaktzählerstufe ZE2 weist einen negierenden Reseteingang NR auf, sowie einen Zeittaktausgang ZTA, an den die Freigabeleitung F angeschlossen ist. Das über die Freigabeleitung F übertragene Freigabesignal wird, unter der Voraussetzung, daß durch das am negierenden Reseteingang anliegende Resetsignal die Empfangstaktzählerstufe ZE2 nicht schon vorher zurückgesetzt wird, von der Empfangstaktzählerstufe ZE2 jeweils beim Überschreiten des vorgegebenen Zählerhöchststandes erzeugt. Die Empfangstaktzählerstufe ZE2 wird zurückgesetzt, wenn das Resetsignal RES den logischen Wert 0 aufweist. Durch die besondere Gestaltung der Gesamtschaltung kann das Resetsignal RES maximal immer nur einen Empfangstakt ET lang den logischen Wert 0 aufweisen. Das Freigabesignal F wird über das Ausgangs-UND-Glied UD8 der Zeitteilschaltung ZT als Empfängerwecksignal EWL2 ausgegeben, wenn der zusätzliche Eingang des Ausgangs-UND-Glieds UD8 den logischen Wert 1 aufweist. Wie später noch gezeigt wird, wird der zusätzliche Eingang nur dann mit dem logischen Wert 1 angesteuert, wenn eine Meldungsänderung stattgefunden und die Empfangstaktzählerstufe ZE2 noch nicht das erste Mal über den Zählerhöchststand hinausgezählt hat. Auf diese Weise führen nur Meldungsänderungen, die länger als die vorgegebene Anzahl von Empfangstakten ET andauern, zu einem Weckaufruf an die Mikroprozessoreinheit MP. Kurzzeitige Störungen bleiben unberücksichtigt.

Die Decodierteilschaltung DT erkennt die verschiedenen Meldungen anhand jeweils zwei zeitlich aufeinanderfolgender Taktzeitpunkte, zu denen sie die Eingangssignale I und R jeweils mit sich selbst vergleicht. Dabei dominiert das Eingangssignal I gegenüber dem Eingangssignal R. Das Eingangssignal R kommt nur zur Wirkung, wenn das Eingangssignal I den logischen Wert 0 aufweist. In diesem Fall werden in der Resetteilschaltung RT die UND-Glieder UD4 bis UD6 bezüglich der jeweils anderen Eingänge freigeschaltet. Gleichzeitig wird das UND-Glied UD7 gesperrt.

Ändert sich das Eingangssignal I vom logischen Signalpegel 0 zum logischen Signalpegel 1 unter der Annahme, daß sich vorher mindestens eine Zählrunde der Empfangstaktzählerstufe ZE2 nichts geändert hat, werden einerseits die UND-Glieder UD4 bis UD6 gesperrt und wird andererseits das UND-Glied UD7 freigeschaltet. Da zu diesem Zeitpunkt der logische Wert am positiven Ausgang Q des D-Flip-Flops FF9 noch 0 ist, weist der Ausgang des UND-Gliedes UD7 den logischen Wert 0 auf. Über das ODER-Glied OR2 wird insgesamt ein Resetsignal RES ausgegeben, das den logischen Wert 0 aufweist. Die Empfangstaktzählerstufe ZE2 wird durch dieses Signal zurückgesetzt.

Mit dem nächsten Empfangstakt ET wird das I-Signal vom D-Flip-Flop FF9 übernommen und sowohl an das UND-Glied UD7, als auch an das Exklusiv-ODER-Glied XOR9 weitergeleitet. Der Ausgang des UND-Gliedes UD7 nimmt den logischen Wert 1 an, wodurch die Empfangstaktzählerstufe ZE2 freigegeben wird. Der Ausgang des Exklusiv-ODER-Gliedes XOR9 in der Zeitteilschaltung ZT nimmt ebenfalls den logischen Wert 1 an und schaltet über das ODER-Glied OR3 das Ausgangs-UND-Glied UD8 bezüglich des Freigabesignals F frei.

Aufgrund der Tatsache, daß sich außer dem Signal I seit mindestens einer Zählrunde der Empfangstaktzählerstufe ZE2 nichts geändert hat, weisen jeweils die mit den positiven Ausgängen Q der D-Flip-Flops FF10 bis FF12 verbundenen ersten Eingänge der Exklusiv-ODER-Glieder XOR6 bis XOR8 gleiche logische Werte wie die jeweils zweiten Eingänge auf, die mit Ausgängen der D-Flip-Flops FF6 bis FF8 der Decodierteilschaltung DT verbunden sind. Zwischen dem ersten und zweiten Eingang des Exklusiv-ODER-Gliedes XOR9 ergeben sich aber unterschiedliche logische Werte, wodurch der Ausgang des Exklusiv-ODER-Gliedes XOR9 den logischen Wert 1 annimmt. Dadurch wird über das ODER-Glied OR3 das Ausgangs-UND-Glied UD8 bezüglich des Freigabesignals F freigeschaltet. Das Freigabesignal F, das jeweils beim Übergang vom höchsten zum niedrigsten Zählerstand erzeugt wird, wird über das Ausgangs-UND-Glied UD8 als Empfängerwecksignal EWL2 ausgegeben.

Das Empfängerwecksignal EWL2 steuert die Steuereingänge S der Auswahlschalter MUX5 bis MUX8 an, die die Signale an den jeweiligen Eingängen A auf die Ausgänge durchschalten. Mit dem nächsten Empfangstakt ET werden die neuen Signalzustände SZ1 bis SZ4 von den D-Flip-Flops FF10 bis FF13 übernommen, von denen nur der Signalzustand SZ4 tatsächlich neu ist. Mit der Übernahme des neuen Signalzustandes SZ4 weisen beide Eingänge des Exklusiv-ODER-Gliedes XOR9 wieder den gleichen logischen Wert auf, wodurch über das ODER-Glied OR3 das Ausgangs-UND-Glied UD8 gesperrt wird. Das Empfängerwecksignal EWL2 wird abgeschaltet, woraufhin die Auswahlschalter MUX5 bis MUX8 die Signale an den jeweiligen Eingängen B durchschalten.

Solange keine weitere Änderung der Signalzustände SZ1 bis SZ4 auftritt, bleibt dieser Zustand erhalten.

Weist das Eingangssignal I den logischen Wert 0 auf, hängt der Meldungsgehalt vom Eingangssignal R ab. Dabei wird das Eingangssignal R zunächst vom D-Flip-Flop FF5 übernommen und anschließend mittels des Exklusiv-ODER-Gliedes XOR5 und der UND-Glieder UD2 und UD3 ausgewertet. Das UND-Glied UD2 weist dabei negierende Eingänge auf. Die Prüfung erfolgt parallel, wobei das Exklusiv-ODER-Glied XOR5 das Eingangssignal R daraufhin überprüft, ob sich nach einem Empfangstakt ET der Signalzustand des Eingangssignals R gegenüber dem vor dem Empfangstakt ET verändert hat. Im Falle einer Veränderung nimmt der Ausgang des Exklusiv-ODER-Gliedes XOR5 den logischen Wert 1 an. Das UND-Glied UD2 überprüft das Eingangssignal R daraufhin, ob das Eingangssignal R nach wie vor eines Empfangstaktes ET den logischen Wert 0 aufweist; wenn ja, nimmt der Ausgang des UND-Gliedes UD2 den logischen Wert 1 an. Schließlich prüft das UND-Glied UD3 das Eingangssignal R daraufhin, ob das Eingangssignal R nach wie vor eines Empfangstaktes ET den logischen Wert 1 aufweist; wenn ja, nimmt der Ausgang des UND-Gliedes UD3 den logischen Wert 1 an.

Je nach dem, welcher Signalzustand des Eingangssignals R vorliegt, übernimmt eines der jeweils den vorbeschriebenen Schaltungsgliedern nachgeschalteten D-Flip-Flops FF6 bis FF8 den logischen Wert 1. Den D-Flip-Flops FF6 bis FF8 sind, wie auch dem D-Flip-Flop FF9, jeweils eines der UND-Glieder UD4 bis UD7 parallel geschaltet, und zwar in der Weise, daß je UND-Glied UD4 bis UD7 ein erster und ein zweiter Eingang einmal mit dem Eingang und einmal mit dem Ausgang jeweils eines der D-Flip-Flops FF6 bis FF9 verbunden sind.

Die UND-Glieder UD4 bis UD6 weisen je einen negierenden dritten Eingang auf, die mit dem Eingangssignal I angesteuert werden. Da das Eingangssignal I für diesen Beschreibungsteil den logischen Wert 0 aufweist, sind die UND-Glieder UD4 bis UD6 wirksam geschaltet, während das UND-Glied UD7 gesperrt ist. Da das Eingangssignal R zu jeder Zeit einen der vorbeschriebenen Signalzustände aufweist, führt zu jeder Zeit ein Ausgang der Schaltglieder XOR5, UD2 bzw. UD3 den logischen Wert 1.

Angenommen sei, daß der Ausgang des UND-Gliedes UD2 den logischen Wert 1 führt. Ferner sei angenommen, daß längere Zeit keine Signalzustandsänderung erfolgt ist. In diesem Fall weisen sowohl der Dateneingang D als auch der positive Ausgang Q des D-Flip-Flops FF7 den logischen Wert 1 auf, während die Dateneingänge D und die positiven Ausgänge Q der D-Flip-Flops FF6 und FF8 den logischen Wert 0 aufweisen. Angenommen sei also, daß der Signalzustand SZ2 vorliegt. Das UND-Glied UD5 weist deshalb ausgangsseitig den logischen Wert 1 auf, der über das ODER-Glied OR2 die Empfangstaktzählerstufe ZE2 im Zählzustand hält.

Ändert sich der Signalzustand des Eingangssignals R von dem ständigen logischen Wert 1 auf den ständigen logischen Wert 0, weist der Dateneingang des D-Flip-Flops FF7 den logischen Wert 0 und der Dateneingang des D-Flip-Flops FF8 den logischen Wert 1 auf. Damit werden sämtliche UND-Glieder UD4 bis UD7 gesperrt.

Das Resetsignal RES nimmt den logischen Wert 0 an, wodurch die Empfangstaktzählerstufe ZE2 zurückgesetzt wird. Mit dem nächsten Empfangstakt ET nimmt der positive Ausgang Q des D-Flip-Flops FF8 den logischen Wert 1 an, weshalb über das UND-Glied UD6 und das ODER-Glied OR2 die Empfangstaktzählerstufe ZE2 freigeschaltet wird. Die Empfangstaktzählerstufe ZE2 beginnt zu zählen.

Nachdem nun der neue Signalzustand SZ3 vorliegt, wird über das Exklusiv-ODER-Glied XOR8 und das ODER-Glied OR3 das Ausgangs-UND-Glied UD8 freigeschaltet. Beim Überlauf der Empfangstaktzählerstufe ZE2 wird das Freigabesignal F als Empfängerwecksignal EWL2 ausgegeben. Gleichzeitig werden die Auswahlschalter MUX5 bis MUX8 umgesteuert, so daß die D-Flip-Flops FF10 bis FF13 die bzw. den neuen Signalzustand übernehmen können. Als Folge davon wird das Ausgangs-UND-Glied UD8 wieder gesperrt geschaltet, bis eine neue Signalzustandsänderung erfolgt.

Weitere mögliche Signalzustandsänderungen laufen in analoger Weise ab.

Die positiven Ausgänge Q der D-Flip-Flops FF10 bis FF13 sind auf Pins P1 bis P4 geführt, an denen die Signalzustände bei Auftreten eines Empfängerwecksignals EWL2 abgefragt werden können. Die Pins P1 bis P4 sind Teil des Meldeinformationsausgabeschaltungsteils PORT.

## Patentansprüche

1. Verfahren zur Steuerung eines auszusendenden Daten- und Steuerbitstroms, sowie eines empfangenen Daten- und Meldebitstroms einer seriellen Schnittstelle mittels einer eine den auszusendenden bzw. empfangenen Datenbitstrom parallel-seriell und umgekehrt wandelnden Bitstromwandlereinrichtung aufweisenden mikroprozessorgesteuerten Schnittstellenschaltungsanordnung,
**dadurch gekennzeichnet,** daß die in der Schnittstellenschaltungsanordnung enthaltene Mikroprozessoreinheit (MP) eine erste Zusatzeinrichtung derart voreinstellt, daß diese Zusatzeinrichtung einerseits einen voreinstellungsabhängigen Steuerbitstrom und andererseits abhängig von der Voreinstellung entweder den von der Bitstromwandlereinrichtung (BW) seriell gewandelten Datenbitstrom oder einen voreinstellungsabhängigen selbst erzeugten Datenbitstrom aussendet, daß beim Aussenden des Daten- bzw. Steuerbitstroms abhängig von der Sendegeschwindigkeit Wecksignale für die Mikroprozessoreinheit (MP) erzeugt werden, daß eine zweite Zusatzeinrichtung aus dem empfangenen Melde- und gegebenenfalls Datenbitstrom Meldungen herausfiltert, auf eine Meldungsänderungen hin untersucht und dann bereitstellt, während der reine Datenbitstrom an die Bitstromwandlereinrichtung (BW) gesendet wird, und daß bei Vorliegen einer Meldungsänderung, die länger als eine vorgegebene Zeitspanne andauert, ein Wecksignal für die Mikroprozessoreinheit (MP) erzeugt wird, die daraufhin die geänderte Meldung abholt.

2. Verfahren nach Anspruch 1,
**dadurch gekennzeichnet,** daß beim Aussenden des Steuer- bzw. Datenbitstroms mit dem Sendetakt kontinuierlich und wiederholend mitgezählt und abhängig von einem vorgebbaren Zählerhöchstwert jeweils bei Erreichen des Zählerhöchstwertes ein Wecksignal erzeugt wird.

3. Verfahren nach Anspruch 1 oder 2,
**dadurch gekennzeichnet,** daß beim Empfangen des Melde- bzw. Datenbitstroms jeweils ab einer Meldungsänderung neu beginnend mit den Empfangstakten kontinuierlich und wiederholend mitgezählt und abhängig von einem vorgebbaren Zählerhöchstwert jeweils bei Erreichen des Zählerhöchstwertes ein Wecksignal erzeugt wird, von denen jeweils nur das erste Wecksignal nach einer Meldungsänderung wirksam geschaltet wird.

4. Schaltungsanordnung zur Steuerung einer seriellen Schnittstellenschaltung mit einer Mikroprozessoreinheit, einer Bitstromwandlereinrichtung, einer für auszusendende Bitströme der Bitstromwandlereinrichtung nachgeschalteten Sendeschaltung, einer für zu empfangende Bitströme der Bitstromwandlereinrichtung vorgeschalteten Empfangsschaltung und einer Taktzählerstufe für zu sendende oder zu empfangende Bitströme,
**dadurch gekennzeichnet,**
daß die Sendeschaltung (SS) einen mit der Mikroprozessoreinheit (MP) der Schnittstellenschaltungsanordnung in Verbindung stehenden speichernden Informationsaufnahmeschaltungsteil (REG) und die Empfangsschaltung (ES) einen mit derselben Mikroprozessoreinheit (MP) in Verbindung stehenden Meldeinformationsausgabeschaltungsteil (PORT) aufweist, daß die Sende- und Empfangsschaltung (SS und ES) eine mit einer Sende- bzw. Empfangstaktleitung (ST bzw. ET) verbundene und je eine jeweils mit einem vorgegebenen Zählerhöchstwert beaufschlagte Sende- bzw. Empfangstaktzählerstufe (ZS bzw. ZE) aufweisen, daß die Sendeschaltung (SS) eine vom Inhalt des speichernden Informationsaufnahmeschaltungsteils (REG), von der Sendetaktzählerstufe (ZS) und den Signalen auf der Sendetaktleitung (ST) abhängige Bitstrom Generier- bzw. Bitstromdurchschaltelogik (SL) und die Empfangsschaltung (ES) eine von der Empfangstaktzählerstufe (ZE) und den Signalen auf der Empfangstaktleitung (ET), der Empfangsdatenleitung (DLAN) und den Meldeleitungen (ML) abhängige Empfangslogik (EL) aufweisen, daß die Sendelogik (SL) Ausgänge für Steuerleitungen (STL) und eine Sendedatenleitung (DLAB) aufweist und daß die Sendelogik (SL) über eine Senderweckleitung (SWL) und die Empfangslogik (EL) über eine Empfängerweckleitung (EWL) jeweils mit der Mikroprozessoreinheit (MP) verbunden sind.

5. Schaltungsanordnung nach Anspruch 4,
**dadurch gekennzeichnet,** daß in der Empfangsschaltung (ES) für jede der Meldeleitungen (z.B. ML1 bis ML4) eine Mehrtaktspeicherstufe vorgesehen ist, die aus einem Auswahlschalter (z.B. MUX1) mit nachgeschaltetem Speicher-Glied (z.B. FF1), dem wiederum ein Exklusiv-ODER-Glied (z.B. XOR1) nachgeschaltet ist, gebildet sind, daß die Auswahlschalter (z.B. MUX1) der Mehrtaktspeicherstufen jeweils einen Steuereingang (S) und zwei Dateneingänge (A und B) aufweisen, von denen jeweils die ersten Dateneingänge (A) mit je einer Meldeleitung (z.B. ML1) und die zweiten Dateneingänge (B) mit je einem positiven Ausgang eines der den jeweiligen Auswahlschaltern (z.B. MUX1) nachgeschalteten Speicher-Gliedern (z.B. FF1) verbunden sind, daß die ersten Dateneingänge (A) der Auswahlschalter (z.B. MUX1) je mit einem der Eingänge derjenigen Exklusiv-ODER-Glieder (z.B. XOR1) verbunden sind, die jeweils dem dem jeweiligen Auswahlschalter (z.B. MUX1) nachgeschalteten Speicher-Glied (z.B. FF1) nachgeschaltet sind, daß die Ausgänge der Exklusiv-ODER-Glieder (z.B. XOR1) mit Eingängen eines ODER-Gliedes (OR1) verbunden sind, dessen Ausgang einerseits mit dem negierenden Reseteingang (NR) einer Empfangstaktzählerstufe (ZE1) und andererseits mit einem ersten Eingang eines Ausgangs-UND-Gliedes (UD1) verbunden ist, daß ein zweiter Eingang des Ausgangs-UND-Gliedes (UD1) mit dem Zeittaktausgang (ZTA) der Empfangstaktzählerstufe (ZE1) verbunden ist, daß der Ausgang des Ausgangs-UND-Gliedes (UD1) einerseits mit den Steuereingängen (S) der Auswahlschalter (MUX) und andererseits mit der Empfängerweckleitung (EWL1) verbunden ist und daß die Takteingänge der Speicher-Glieder (FF) und der Empfangstaktzählerstufe (ZE1) an die Empfangstaktleitung (ET) angeschlossen sind.

6. Schaltungsanordnung nach Anspruch 4,
**dadurch gekennzeichnet,** daß die Empfangslogik (EL) der Empfangsschaltung (ES) eine Decodierteilschaltung (DT) mit einem Eingang für eine einzelne Meldeleitung (I) und einem Eingang für eine einzelne Empfangsdatenleitung (R), sowie eine von der Decodierteilschaltung (DT) abhängige Resetteilschaltung (RT) und eine der Decodierteilschaltung (DT) nachgeschaltete Zeitteilschaltung (ZT) aufweist, daß der Ausgang der Resetteilschaltung (RT) mit dem negierenden Reseteingang (NR) einer Empfangstaktzählerstufe (ZE2) verbunden ist, die über den Zeittaktausgang (ZTA) mit der Zeitteilschaltung (ZT) verbunden ist und daß die Zeitteilschaltung (ZT) mit der Empfängerweckleitung (EWL2) verbunden ist.

7. Schaltungsanordnung nach Anspruch 6,
**dadurch gekennzeichnet,** daß die Decodierteilschaltung (DT) eine erste Speicherstufe mit einem Speicher-Glied (FF5) aufweist, an dessen Dateneingang die einzelne Empfangsdatenleitung (R) angeschlossen ist, daß dem Speicher-Glied (FF5) der ersten Speicherstufe eine Decodierstufe, bestehend aus einem Exklusiv-ODER-Glied (XOR5), einem ersten UND-Glied (UD2) mit negierenden Eingängen, sowie einem zweiten UND-Glied (UD3), nachgeschaltet ist, daß die jeweils ersten Eingänge der Schaltglieder der Decodierstufe mit dem Dateneingang, und die jeweils zweiten Eingänge der Schaltglieder der Decodierstufe mit dem positiven Ausgang des Speicher-Gliedes (FF5) der ersten Speicherstufe verbunden sind, daß die Ausgänge der Schaltglieder der Decodierstufe, sowie die einzelne Meldeleitung (I) je einerseits mit einem der Dateneingänge von Speicher-Gliedern (FF6 bis FF9) einer zweiten Speicherstufe und andererseits mit jeweils einem der ersten Eingänge von UND-Gliedern (UD4 bis UD7) der Resetteilschaltung (RT) verbunden sind, daß die jeweils zweiten Eingänge der UND-Glieder (UD4 bis UD7) der Resetteilschaltung (RT) in gleichsinniger Zuordnung der jeweiligen ersten Eingänge zu jeweils einem der Dateneingänge der Speicher-Glieder (FF6 bis FF9) der zweiten Speicherstufe mit jeweils einem der positiven Ausgänge derselben Speicher-Glieder (FF6 bis FF9) verbunden sind, daß die positiven Ausgänge der Speicher-Glieder (FF6 bis FF9) der zweiten Speicherstufe ferner je mit jeweils einem der Eingänge von Mehrtaktspeicherstufen der Zeitteilschaltung (ZT) verbunden sind, daß die Ausgänge der Mehrtaktspeicherstufen über ein ODER-Glied (OR3) der Zeitteilschaltung (ZT) mit einem ersten Eingang eines Ausgangs-UND-Gliedes (UD8) der Zeitteilschaltung (ZT) verbunden sind, dessen zweiter Eingang mit einem Zeittaktausgang (ZTA) der Empfangstaktzählerstufe (ZE2), und dessen Ausgang einerseits mit der Empfängerweckleitung (EWL2) und andererseits mit Steuereingängen (S) der Mehrtaktspeicherstufen verbunden sind, daß die UND-Glieder (UD4 bis UD6) der Resetteilschaltung (RT) jeweils einen negierenden dritten Eingang aufweisen, die mit der einzelnen Meldeleitung (I) verbunden sind, daß die Ausgänge der UND-Glieder (UD4 bis UD7) der Resetteilschaltung (RT) je über ein ODER-Glied (OR2) der Resetteilschaltung (RT) mit einem negierenden Reseteingang (NR) der Empfangstaktzählerstufe (ZE2) verbunden sind und daß die Speicher-Glieder (FF5 bis FF9) der Decodierteilschaltung (DT), die Empfangstaktzählerstufe (ZE2), sowie die Mehrtaktspeicherstufen mit der Empfangstaktleitung (ET) verbunden sind.

8. Schaltungsanordnung nach Anspruch 7,
**dadurch gekennzeichnet,** daß die Mehrtaktspeicherstufen jeweils aus einem Auswahlschalter (z.B. MUX5) mit nachgeschaltetem Speicher-Glied (z.B. FF10), dem wiederum ein Exklusiv-ODER-Glied (z.B. XOR6) nachgeschaltet ist, gebildet sind, daß die Auswahlschalter (z.B. MUX5) der Mehrtaktspeicherstufen jeweils einen Steuereingang (S) und zwei Dateneingänge (A und B) aufweisen, von denen jeweils die ersten Dateneingänge (A) mit je einem positiven Ausgang der Speicher-Glieder (FF6 bis FF9) der Resetteilschaltung (RT) und jeweils die zweiten Dateneingänge (B) mit je einem positiven Ausgang eines der den jeweiligen Auswahlschaltern nachgeschalteten Speicher-Gliedern (z.B. FF10) der Mehrtaktspeicherstufen verbunden sind, daß die ersten Dateneingänge (A) der Auswahlschalter (z.B. MUX 5) je mit jeweils einem der Eingänge derjenigen Exklusiv-ODER-Glieder (z.B. XOR6) verbunden sind, die jeweils dem dem jeweiligen Auswahlschalter (z.B. MUX5) nachgeschalteten Speicher-Glied (z.B. FF10) nachgeschaltet sind und daß die Ausgänge der Exklusiv-ODER-Glieder (z.B. XOR6) der Mehrtaktspeicherstufen jeweils einen Ausgang jeweils einer der Mehrtaktspeicherstufen bilden.

9. Schaltungsanordnung nach einem der Ansprüche 5 bis 8,
**dadurch gekennzeichnet,** daß die Speicher-Glieder aus D-Flip-Flops gebildet sind.

10. Schaltungsanorndung nach einem der Ansprüche 4 bis 9,
**dadurch gekennzeichnet,** daß die Sende- bzw. Empfangstaktzählerstufe (ZS bzw. ZE) aus programmierbaren Zählern gebildet sind, deren Überlaufausgänge jeweils die Zeittaktausgänge (ZTA) bilden.

## Claims

1. Method for controlling a data and control bit flow which is to be transmitted, as well as a received data and message bit flow of a serial interface by means of a microprocessor-controlled interface circuit arrangement which has a bit flow converter device which converts the data bit flow to be transmitted or the received data bit flow from parallel into serial form and vice versa, characterized in that the microprocessor unit (MP) which is included in the interface circuit arrangement presets a first additional device in such a manner that this additional device transmits on the one hand a control bit flow which is dependent on the presetting and, on the other hand, depending on the presetting, either the data bit flow converted into serial form by the bit flow converter device (BW) or a self-generated data bit flow which is dependent on the presetting, in that, during the transmission of the data bit flow or control bit flow, wake-up signals are produced for the microprocessor unit (MP) as a function of the transmission speed, in that a second additional device filters messages out from the message bit flow, and possibly the data bit flow received, searches for and prepares message changes while the pure data bit flow is transmitted to the bit flow converter device (BW), and in that, if a message change is present which lasts for longer than a predetermined time interval, a wake-up signal is produced for the microprocessor unit (MP) which thereupon retrieves the changed message.

2. Method according to Claim 1, characterized in that counting is carried out continuously and repeatedly during the transmission of the control bit flow or data bit flow, using the transmission clock, and a wake-up signal is produced as a function of a predeterminable counter maximum value, in each case on reaching the counter maximum value.

3. Method according to Claim 1 or 2, characterized in that, during reception of the message bit flow or data bit flow, counting is carried out continuously and repeatedly, starting again in each case from a message chain, using the receiving clocks, and a wake-up signal is produced as a function of a predeterminable counter maximum value in each case on reaching the counter maximum value, of which wake-up signals in each case only the first wake-up signal after a message change is switched to be effective.

4. Circuit arrangement for controlling a serial interface circuit having a microprocessor unit, a bit flow converter device, a transmitting circuit which is connected downstream of the bit flow converter device for bit flows which are to be transmitted, a receiving circuit which is connected upstream of the bit flow converter device for bit flows which are to be received, and a clock counter stage for bit flows which are to be transmitted or are to be received, characterized in that the transmitting circuit (SS) has a storing information receiving circuit element (REG) which is connected to the microprocessor unit (MP) of the interface circuit arrangement, and the receiving circuit (ES) has a message information output circuit element (PORT) which is connected to the same microprocessor unit (MP), in that the transmitting and receiving circuits (SS and ES) have a transmitting and receiving clock counter stage respectively (ZS and ZE respectively) which are connected to a transmitting and receiving clock line respectively (ST and ET respectively) and are in each case acted on respectively by a predetermined counter maximum value, in that the transmitting circuit (SS) has bit flow generating and bit flow through-switching logic (SL) which is dependent on the contents of the storing information receiving circuit element (REG), on the transmitting clock counter stage (ZS) and the signals on the transmitting clock line (ST), and the receiving circuit (ES) has receiving logic (EL) which is dependent on the receiving clock counter stage (ZE) and the signals on the receiving clock line (ET), the receiving data line (DLAN) and the message lines (ML), in that the transmitting logic (SL) has outputs for control lines (STL) and a transmitting data line (DLAB), and in that the transmitting logic (SL) is connected to the microprocessor unit (MP) via a transmitter wake-up line (SWL), and the receiving logic (EL) is connected to the microprocessor unit (MP) via a receiver wake-up line (EWL).

5. Circuit arrangement according to Claim 4, characterized in that a multiple clock-pulse storage stage is provided in the receiving circuit (ES) for each of the message lines (for example ML1 to ML4), which multiple clock-pulse storage stages are formed from a selector switch (for example MUX1) with a downstream-connected storage element (for example FF1) downstream of which there is in turn connected an exclusive-OR gate (for example XOR1), in that the selector switches (for example MUX1) of the multiple clock-pulse storage stages each have one control input (S) and two data inputs (A and B), of which in each case the first data inputs (A) are connected to in each case one message line (for example ML1) and the second data inputs (B) are connected to in each case one positive output of one of the storage elements (for example FF1) which are connected downstream of the respective selector switches (for example MUX1), in that the first data inputs (A) of the selector switches (for example MUX1) are connected to in each case one of the inputs of those exclusive-OR gates (for example XOR1) which are in each case connected downstream of the storage element (for example FF1) which is connected downstream of the respective selector switch (for example MUX1), in that the outputs of the exclusive-OR gates (for example XOR1) are connected to inputs of an OR gate (OR1) whose output is connected on the one hand to the inverting reset input (NR) of a receiving clock counter stage (ZE1) and on the other hand to a first input of an output AND gate (UD1), in that a second input of the output AND gate (UD1) is connected to the time clock output (ZTA) of the receiving clock counter stage (ZE1), in that the output of the output AND gate (UD1) is connected on the one hand to the control inputs (S) of the selector switches (MUX) and on the other hand to the receiver wake-up line (EWL1), and in that the clock inputs of the storage elements (FF) and of the receiving clock counter stage (ZE1) are connected to the receiving clock line (ET).

6. Circuit arrangement according to Claim 4, characterized in that the receiving logic (EL) of the receiving circuit (ES) has a decoder subcircuit (DT) with an input for an individual message line (I) and with an input for an individual receiving data line (R), as well as a reset subcircuit (RT), which is dependent on the decoder subcircuit (DT), and a timing subcircuit (ZT), which is connected downstream of the decoder subcircuit (DT), in that the output of the reset subcircuit (RT) is connected to the inverting reset input (NR) of a receiving clock counter stage (ZE2) which is connected via the time clock output (ZTA) to the timing subcircuit (ZT), and in that the timing subcircuit (ZT) is connected to the receiver wake-up line (EWL2).

7. Circuit arrangement according to Claim 6, characterized in that the decoder subcircuit (DT) has a first storage stage with a storage element (FF5) to whose data input the individual receiving data line (R) is connected, in that a decoder stage, comprising an exclusive-OR gate (XOR5), a first AND gate (UD2) with inverting inputs and a second AND gate (UD3) is connected downstream of the storage element (FF5) of the first storage stage, in that the respective first inputs of the switching elements of the decoder stage are connected to the data input, and the respective second inputs of the switching elements of the decoder stage are connected to the positive output of the storage element (FF5) of the first storage stage, in that the outputs of the switching elements of the decoder stage as well as the individual message line (I) are connected on the one hand to in each case one of the data inputs of the storage elements (FF6 to FF9) of a second storage stage and on the other hand to in each case one of the first inputs of AND gates (UD4 to UD7) of the reset subcircuit (RT), in that the respective second inputs of the AND gates (UD4 to UD7) of the reset subcircuit (RT) are connected, allocated in the same sense to the respective first inputs to in each case one of the data inputs of the storage elements (FF6 to FF9) of the second storage stage, to in each case one of the positive outputs of the same storage elements (FF6 to FF9), in that the positive outputs of the storage elements (FF6 to FF9) of the second storage stage are furthermore each connected to in each case one of the inputs of the multiple clock-pulse storage stages of the timing subcircuit (ZT), in that the outputs of the multiple clock-pulse storage stages are connected via an OR gate (OR3) of the timing subcircuit (ZT) to a first input of an output AND gate (UD8) of the timing subcircuit (ZT), the second input of which output AND gate (UD8) is connected to a timing clock output (ZTA) of the receiving clock counter stage (ZE2) and the output of which output AND gate (UD8) is connected on the one hand to the receiver wake-up line (EWL2) and on the other hand to control inputs (S) of multiple clock-pulse storage stages, in that the AND gates (UD4 to UD6) of the reset subcircuit (RT) in each case have an inverting third input, which inputs are connected to the individual message line (I), in that the outputs of the AND gates (UD4 to UD7) of the reset subcircuit (RT) are connected via in each case one OR gate (OR2) of the reset subcircuit (RT) to an inverting reset input (NR) of the receiving clock counter stage (ZE2), and in that the storage elements (FF5 to FF9) of the decoder subcircuit (D2), the receiving clock counter stage (ZE2) and the multiple clock-pulse storage stages are connected to the receiving clock line (ET).

8. Circuit arrangement according to Claim 7, characterized in that the multiple clock-pulse storage stages are in each case formed from a selector switch (for example MUX 5) with a downstream-connected storage element (for example FF10), which in turn has an exclusive-OR gate (for example XOR6) connected downstream of it, in that the selector switches (for example (MUX5) of the multiple clock-pulse storage stages in each case have one clock input (S) and two data inputs (A and B) of which in each case the first data inputs (A) are connected to in each case one positive output of the storage elements (FF6 to FF9) of the reset subcircuit (RT), and the second data inputs (B) in each case are connected to in each case one positive output of one of the storage elements (for example FF10) of the multiple clock-pulse storage stages, which storage elements (for example FF10) are connected downstream of the respective selector switches, in that the first data inputs (A) of the selector switches (for example MUX5) are in each case connected to in each case one of the inputs of those exclusive-OR gates (for example XOR6) which are in each case connected downstream of the storage element (for example FF10) which is connected downstream of the respective selector switch (for example MUX5), and in that the outputs of the exclusive-OR gates (for example XOR6) of the multiple clock-pulse storage stages in each case form one output of in each case one of the multiple clock-pulse storage stages.

9. Circuit arrangement according to one of Claims 5 to 8, characterized in that the storage elements are formed from D-flipflops.

10. Circuit arrangement according to one of Claims 4 to 9, characterized in that the transmitting and receiving clock counter stages respectively (ZS and ZE respectively) are formed from programmable counters whose overflow outputs in each case form the timing clock outputs (ZTA).

## Revendications

1. Procédé pour commander un flux de données et de bits de commande, qui doit être émis, ainsi qu'un flux reçu de données et de bits de signalisation d'une interface série, au moyen d'un montage d'interface commandé par microprocesseur et comportant un dispositif de conversion du flux de bits, qui réalise la conversion parallèle-série et la conversion inverse du flux de bits de données devant être émis ou reçu,
caractérisé en ce que l'unité à microprocesseur (MP), qui est située dans le montage d'interface, réalise le préréglage d'un premier dispositif supplémentaire de telle sorte que ce dispositif supplémentaire émet, d'une part, un flux de bits de commande, qui dépend du préréglage, et, d'autre part, en fonction du préréglage, soit le flux de bits de données converti en série par le dispositif (BW) de conversion du flux de bits, soit un flux de bits de données produit en fonction du préréglage, en ce que, lors de l'émission du flux de bits de données ou du flux de bits de commande, des signaux d'appel pour l'unité à microprocesseur (MP) sont produits en fonction de la vitesse d'émission, qu'un second dispositif supplémentaire sépare par filtrage des signalisations à partir du flux reçu de bits de signalisation et éventuellement du flux reçu de bits de données, examine s'il existe une modification des signalisations et prépare une telle modification pendant que le flux pur de bits de données est émis au niveau du dispositif (BW) de conversion du flux de bits, et en ce que, dans le cas de la présence d'un changement de signalisation, qui dure plus longtemps qu'un intervalle de temps prédéterminé, un signal d'appel est produit pour l'unité à microprocesseur (MP), qui demande alors la signalisation modifiée.

2. Procédé suivant la revendication 1,
caractérisé en ce que, lors de l'émission du flux de bits de commande ou de données, un signal d'appel est produit, avec un comptage simultané continu répétitif au moyen de la cadence d'émission, et en fonction d'une valeur maximale prédéterminée du compteur, lorsque la valeur maximale du compteur est atteinte.

3. Procédé suivant la revendication 1 ou 2,
caractérisé en ce que, lors de la réception du flux de bits de signalisation ou de données, un signal d'appel est produit respectivement à partir d'un changement de signalisation, en commençant à nouveau avec les cadences de réception, moyennant un comptage simultané continu et répétitif et indépendamment d'une valeur maximale pouvant être prédéterminée du compteur, lorsque la valeur maximale du compteur est atteinte, seul le premier signal d'appel étant activé après un changement de signalisation.

4. Montage pour la commande d'un circuit d'interface série comportant une unité à microprocesseurs, un dispositif de conversion du flux de bits, un circuit d'émission branché en aval du dispositif de conversion du flux de bits pour des flux de bits devant être émis, un circuit de réception branché en amont du dispositif de conversion du flux de bits pour des flux de bits devant être reçus, et un étage de comptage de cadence pour des flux de bits devant être émis ou reçus,
caractérisé
en ce que le circuit d'émission (SS) comporte une partie (REG) formant circuit de réception d'informations, qui exécute une mémorisation et qui est connectée à l'unité à microprocesseurs (MP) du montage d'interface, et en ce que le circuit de réception (ES) comporte une partie (PORT) formant circuit de sortie d'informations de signalisation, qui est reliée à la même unité à microprocesseurs (MP), en ce que le circuit d'émission et le circuit de réception (SS et ES) comportent un étage (ZS ou ZE) de comptage d'impulsions de cadence d'émission ou de réception, qui est relié à une ligne (ST et ET) de transmission de cadence d'émission et de réception et qui est chargé respectivement par une valeur maximale de comptage prédéterminée, en ce que le circuit d'émission (SS) comporte une unité logique (SL) de production et d'interconnexion du flux de bits, dont le fonctionnement dépend du contenu de la partie de circuit (REG) de réception d'informations, qui réalise une mémorisation, de l'étage (ZS) de comptage des impulsions de cadence d'émission et des signaux présents dans la ligne (ST) de transmission des impulsions de cadence d'émission, et en ce que le circuit de réception (ES) comporte une unité logique de réception (EL), dont le fonctionnement dépend de l'étage (ZE) de comptage des impulsions de cadence de réception et des signaux présents dans la ligne (ET) de transmission de la cadence de réception, dans la ligne (DLAN) de transmission de données et dans les lignes de signalisation (ML), en ce que l'unité logique d'émission (SL) comporte des sorties pour des lignes de commande (STL) et pour une ligne (DLAB) de transmission de données d'émission, et en ce que l'unité logique d'émission (SL) est connectée, par l'intermédiaire d'une ligne (SWL) d'appel d'émission, et l'unité logique de réception (EL) est reliée par l'intermédiaire d'une ligne (EWL) d'appel de réception, respectivement à l'unité à microprocesseurs (MP).

5. Montage suivant la revendication 4,
caractérisé en ce que, dans le circuit de réception (ES), il est prévu, pour chacune des lignes de signalisation (par exemple ML1 à ML4), un étage de mémoires à cadences multiples, ces étages de mémoires étant formés par un commutateur de sélection (par exemple MUX1) en aval duquel est branché un circuit de mémoire (par exemple FF1), en aval duquel est branché à nouveau un circuit OU-Exclusif (par exemple XOR1), en ce que les commutateurs de sélection (par exemple MUX1) des étages de mémoire à cadences multiples comportent respectivement une entrée de commande (S) et deux entrées de données (A et B), parmi lesquelles les premières entrées (A) de données sont connectées à une ligne de signalisation (par exemple ML1) et les secondes entrées (B) de données sont connectées à une sortie positive de l'un des circuits de mémoire (par exemple FF1) branché en aval des commutateurs de sélection respectifs (par exemple MUX1), en ce que les premières entrées (A) de données des commutateurs de sélection (par exemple MUX1) sont connectées respectivement à l'une des entrées des circuits OU-Exclusif (par exemple XOR1), qui sont branchés en aval du circuit de mémoire (par exemple FF1) branché en aval du commutateur de sélection respectif (par exemple MUX1), en ce que les sorties des circuits OU-Exclusif (par exemple XOR1) sont connectées aux entrées d'un circuit OU (OR1), dont la sortie est reliée, d'une part, à l'entrée inverseuse de remise à l'état initial (NR) d'un étage (ZE1) de comptage des impulsions de cadence de réception et, d'autre part, à une première entrée d'un circuit ET de sortie (UD1), en ce qu'une seconde entrée du circuit ET de sortie (UD1) est reliée à la sortie (ZTA) de cadence temporelle de l'étage (ZE1) de comptage des impulsions de cadence de réception, en ce que la sortie du circuit ET de sortie (UD1) est connectée, d'une part, aux entrées de commande (S) des commutateurs de sélection (MUX) et, d'autre part, à la ligne d'appel de réception (EWL1), et en ce que les entrées de cadence des circuits de mémoire (FF) et de l'étage (ZE1) de comptage des impulsions de cadence de réception sont reliées à la ligne de transmission de cadence de réception (ET).

6. Montage suivant la revendication 4,
caractérisé en ce que l'unité logique de réception (EL) du circuit de réception (ES) comporte un circuit partiel de décodage (DT) comportant une entrée pour une ligne individuelle de signalisation (I) et une entrée pour une ligne individuelle (R) de données de réception, ainsi qu'un circuit partiel de remise à l'état initial (RT), dont le fonctionnement dépend du circuit partiel de décodage (DT), et un circuit partiel de temporisation (ZT), qui est branché en aval du circuit partiel de décodage (DT), en ce que la sortie du circuit partiel de remise à l'état initial (RT) est connectée à l'entrée inverseuse de remise à l'état initial (NR) d'un étage (ZE2) de comptage des impulsions de cadence de réception, qui est reliée, par l'intermédiaire de la sortie de cadence temporelle (ZTA), au circuit partiel de temporisation (ZT), et en ce que le circuit partiel de temporisation (ZT) est connecté à la ligne d'appel de réception (EWL2).

7. Montage suivant la revendication 6,
caractérisé en ce que le circuit partiel de décodage (DT) comporte un premier étage de mémoire comportant un circuit de mémoire (FF5), à l'entrée de données duquel est reliée la ligne individuelle de transmission de données de réception (R), en ce qu'en aval du circuit de mémoire (FF5) du premier étage de mémoire est branché un étage de décodage, qui est constitué d'un circuit OU-Exclusif (XOR5), d'un premier circuit ET (UD2) comportant des entrées inverseuses, ainsi que d'un second circuit (UD3), en ce que les premières entrées respectives des circuits de commutation de l'étage de décodage sont reliées à l'entrée de données et en ce que les secondes entrées respectives des circuits de commutation de l'étage de décodage sont reliées à la sortie positive du circuit de mémoire (FF5) du premier étage de mémoire, en ce que les sorties des circuits de commutation de l'étage de décodage, ainsi que la ligne individuelle de signalisation (I) sont connectées respectivement, d'une part, à l'une des entrées de données de circuits de mémoire (FF6 à FF9) d'un second étage de mémoire et, d'autre part, respectivement à l'une des premières entrées de circuits ET (UD4 à UD7) du circuit partiel de remise à l'état initial (RT), en ce que les secondes entrées respectives des circuits ET (UD4 à UD7) du circuit partiel de remise à l'état initial (RT) sont connectées, selon une association de même sens des premières entrées respectives à l'une des entrées de données des circuits de mémoire (FF6 à FF9) du second étage de mémoire, respectivement à l'une des sorties positives de ces mêmes circuits de mémoire (FF6 à FF9), en ce que les sorties positives des circuits de mémoire (FF6 à FF9) du second étage de mémoire sont, en outre, connectées respectivement à l'une des entrées des étages de mémoires à cadences multiples du circuit partiel de temporisation (ZT), en ce que les sorties des étages de mémoires à cadences multiples sont reliées, par l'intermédiaire d'un circuit OU (OR3) du circuit partiel de temporisation (ZT), à une première entrée d'un circuit ET de sortie (UD8) du circuit partiel de temporisation (ZT), dont la seconde entrée est connectée à une sortie de cadence temporelle (ZTA) de l'étage (ZE2) de comptage de la cadence de réception, et dont la sortie est connectée, d'une part, à la ligne (EWL2) d'appel de réception et, d'autre part, à des entrées de commande (S) des étages de mémoires à cadences multiples, en ce que les circuits ET (UD4 à UD7) du circuit partiel de remise à l'état initial (RT) comportent respectivement une troisième entrée inverseuse, ces entrées étant connectées à la ligne individuelle de signalisation (I), en ce que les sorties des circuits ET (UD4 à UD7) du circuit partiel de remise à l'état initial (RT) sont reliées, respectivement par l'intermédiaire d'un circuit OU (OR2) du circuit partiel de remise à l'état initial (RT), à une entrée inverseuse de remise à l'état initial (NR) de l'étage (ZE2) de comptage de cadence de réception, et en ce que les circuits de mémoire (FF5 à FF9) du circuit partiel de décodage (DT), l'étage (ZE2) de comptage des impulsions de cadence de réception ainsi que les étages de mémoires à cadences multiples sont reliés à la ligne ET de transmission de la cadence de réception.

8. Montage suivant la revendication 7,
caractérisé en ce que les étages de mémoires à cadences multiples sont formés chacun par un commutateur de sélection (par exemple (MUX5), en aval duquel est branché un circuit de mémoire (par exemple FF10), en aval duquel est branché à nouveau un circuit OU-Exclusif (par exemple XOR6), en ce que les commutateurs de sélection (par exemple MUX5) des étages de mémoires à cadences multiples comportent respectivement une entrée de commande (S) et deux entrées de données (A et B), parmi lesquelles les premières entrées (A) de données sont reliées respectivement à une sortie positive des circuits de mémoire (FF6 à FF9) du circuit partiel de remise à l'état initial (RT), et les secondes entrées (B) de données sont reliées respectivement à une sortie positive respective de l'un des circuits de mémoire (par exemple FF10), qui est branché en aval des commutateurs respectifs de sélection, des étages de mémoires à cadences multiples, en ce que les premières entrées (A) de données des commutateurs de sélection (par exemple MUX5) sont connectées respectivement à l'une des entrées des circuits OU-Exclusif (par exemple XOR6), qui sont branchés respectivement en aval du circuit de mémoire (par exemple FF10) branché en aval du commutateur de sélection respectif (par exemple MUX5), et en ce que les sorties des circuits OU-Exclusif (par exemple XOR6) des étages de mémoires à cadences multiples forment une sortie de l'un des étages de mémoires à cadences multiples.

9. Montage suivant l'une des revendications 5 à 8,
caractérisé en ce que les circuits de mémoire sont constitués de bascules bistables de type D.

10. Montage suivant l'une des revendications 4 à 9,
caractérisé en ce que les étages (ZS et ZE) de comptage des impulsions de cadence d'émission ou de réception sont formés par des compteurs programmables, dont les sorties de report forment respectivement les sorties de cadence temporelle (ZTA).
